# EUROPEAN PATENT SPECIFICATION

(11) **EP 4 081 408 B1**
(45) Date of publication and mention of the grant of the patent: **07.08.2024**
(21) Application number: 19842525.8
(22) Date of filing: 23.12.2019
(51) Int. Cl.: B60B 5/02, B60B 9/26, B60C 7/14, B60C 7/18

(54) **NON-PNEUMATIC TIRE SPOKE WITH IMPROVED ELASTOMERIC JOINT BODY**
SPEICHE FÜR NICHTPNEUMATISCHE REIFEN MIT VERBESSERTEM ELASTOMERISCHEN GELENKELEMENT
RAYON POUR PNEU NON-PNEUMATIQUE AVEC ÉLÉMENT ÉLASTOMÈRE DE ARTICULATION AMÉLIORÉ

(43) Date of publication of application: 02.11.2022
(73) Proprietor: COMPAGNIE GENERALE DES ETABLISSEMENTS MICHELIN, 63000 Clermont-Ferrand (FR)
(72) Inventor: CRON, Steven M, Greenville, South Carolina 29605 (US); GAYLO, Ryan Michael, Greenville, South Carolina 29605 (US)
(74) Representative: Casalonga
(86) International application number: PCT/US2019/068267
(87) International publication number: WO 2021/133376

(56) References cited:
- WO-A1-2018/067597
- WO-A1-2019/051493

## Description

### FIELD OF THE INVENTION

The subject matter of the present invention relates to a support structure for a nonpneumatic tire and specifically to improvements to the elastomeric joint bodies of such a support structure. In particular, the present invention relates to a spoke for a non-pneumatic tire according to the preamble of independent claim 1, such as it is e.g. known from WO 2019/051493 A1.

### BACKGROUND

Composite spoke structures have been used to support non-pneumatic tires and may be comprised of an elastomer and a second material having a relatively higher bending stiffness than the elastomer, the composite spring having a first hinge side and a second hinge side comprised of the second material, and a joint body comprised of the elastomer, wherein the second material comprising the first hinge side and second hinge side are discontinuous or otherwise separated from one another by the joint body connecting the first hinge side and the second hinge side.

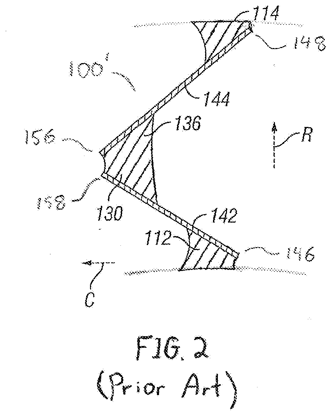

FIG. 2 provides a sectional view of one such prior art spoke 100'. The nose portion, or otherwise referred to as the "joint body" 130 of the spoke 100' is comprised of a solid elastomeric material and acts to connect a first support element and a second support element, here comprising a radially outer support element or "leg" 144 and a radially inner support element or "leg"142 respectively. The nose portion becomes thicker in the circumferential direction ("C") between the radially inner leg 142 and radially outer leg 144 toward the midpoint between the radially inner leg 142 and radially outer leg 144. In reference to a single spoke as shown in this embodiment, the circumferential direction is generally orthogonal to both the radial direction and the lateral direction.

When the spoke is compressed, which would occur in this particular spoke by moving the radially outer elastomeric joint body 114 toward the radially inner elastomeric joint body 112, the elastomeric portion of the nose joint body 130 compresses and tension develops toward the ends 146, 148, 156, 158 of the legs 142, 144. The elastomeric material comprising the elastomeric joint bodies 112, 114, 130 deforms and some energy is lost due to, for example, the hysteretic properties of the material.

As the spoke enters and exits the footprint of the tire, the outer compliant band and radially outer spoke components decelerate and accelerate. The greater the mass of the components means a greater amount of force and energy is required for these accelerations to occur. The spoke and, in particular, the elastomeric joint bodies represent a significant portion of the mass of the tire. The mass of the elastomeric joint bodies contributes to kinetic losses as the spoke enters and exits the footprint.

An improved spoke construction having an improved efficiency and weight reduction would be useful. It would be particularly useful for an improved spoke construction that would have improved efficiency and weight reduction without significant loss of robustness.

### SUMMARY OF THE INVENTION

The above problem is solved by a spoke for a non-pneumatic tire according to independent claim 1. The dependent claims relate to advantageous embodiments. Aspects and advantages of the invention will be set forth in part in the following description, or may be obvious from the description, or may be learned through practice of the invention.

Described herein is a spoke for a non-pneumatic tire having apertures extending through the elastomeric joint bodies of the spoke. The spoke connects a radially inner surface of a radially outer compliant band to a radially outer surface of a hub, the tire defining an axis of rotation about its center and a medial plane tangent to the axis of rotation. The spoke includes a radially outer support element having a radially inner end, a radially outer end, a first side and a second side. The spoke also includes a radially outer elastomeric joint body connecting the radially outer end of the radially outer support element to the radially outer compliant band, the radially outer elastomeric joint body positioned on said second side of said radially outer support element, the radially outer elastomeric joint body having a first surface on the same side of the radially outer elastomeric joint body as the first side of the radially outer support element and a second surface on the same side of the radially outer elastomeric joint body as the second side of said radially outer support element, the elastomeric radially outer joint body having a thickness measured in the circumferential direction, the thickness measured as the circumferential distance between the first surface and the second surface of the radially outer elastomeric joint body. The radially outer support element further includes of one or more elongated reinforcements having a flexural rigidity greater than the elastomer comprising the radially outer joint body, the reinforcement having a length and a thickness measured perpendicular to the length. The radially outer elastomeric joint body further comprises an aperture positioned a distance no greater than two thirds of the minimum thickness of the radially outer elastomeric joint body from the first surface of the radially outer elastomeric joint body.

These and other features, aspects and advantages of the present invention will become better understood with reference to the following description and appended claims. The accompanying drawings, which are incorporated in and constitute a part of this specification, illustrate embodiments of the invention and, together with the description, serve to explain the principles of the invention.

### BRIEF DESCRIPTION OF THE DRA WINGS

A full and enabling disclosure of the present invention, including the best mode thereof, directed to one of ordinary skill in the art, is set forth in the specification, which makes reference to the appended figures, in which:
FIG. 1 provides a lateral side view of an exemplary embodiment of a plurality of spokes forming a part of a tire depicted under nominal loading conditions.
FIG. 2 provides a perspective view of a prior art spoke for a non-pneumatic tire.
FIG. 3 provides a perspective view of an embodiment of the invention showing the elastomeric joint bodies having apertures.
FIG. 4 shows a lateral section view of an alternative embodiment having reinforcement along the circumferentially distal surface of the radially inner and radially outer and nose elastomeric joint bodies.
FIG. 5 shows a lateral section view of an alternative embodiment having reinforcement along the circumferentially distal surface of the nose elastomeric joint body and apertures filled with a low-density material.
FIG. 6 shows a finite element model of the stress concentration in the elastomeric joint bodies during compression of the embodiment of FIG. 4.
FIG. 7 shows a finite element model of the stress concentration in the elastomeric joint bodies during tension of the embodiment of FIG. 4.
FIG. 8 shows a lateral section view of an alternative embodiment having triangular shaped apertures in the nose, radially inner and radially outer elastomeric joint bodies.
FIG. 9 shows a lateral section view of an alternative embodiment having semicircular apertures in the radially outer and radially inner elastomeric joint bodies.

The use of identical or similar reference numerals in different figures denotes identical or similar features.

### DETAILED DESCRIPTION OF THE INVENTION

The present invention provides an improvement to a mechanical structure for resiliently supporting a load. For purposes of describing the invention, reference now will be made in detail to embodiments and/or methods of the invention, one or more examples of which are illustrated in or with the drawings. Each example is provided by way of explanation of the invention, not limitation of the invention. In fact, it will be apparent to those skilled in the art that various modifications and variations can be made in the present invention without departing from the scope of the invention. For instance, features or steps illustrated or described as part of one embodiment, can be used with another embodiment or steps to yield a still further embodiments or methods. Thus, it is intended that the present invention covers such modifications and variations as come within the scope of the appended claims and their equivalents.

The following terms are defined as follows for this disclosure:
"Axial direction" or the letter "A" in the figures refers to a direction parallel to the axis of rotation of for example, the shear band, tire, and/or wheel as it travels along a road surface.

"Radial direction" or the letter "R" in the figures refers to a direction that is orthogonal to the axial direction and extends in the same direction as any radius that extends orthogonally from the axial direction.

"Equatorial plane" means a plane that passes perpendicular to the axis of rotation and bisects the outer compliant band and/or tire structure.

"Circumferential direction" or the letter "C" in the figures refers to a direction is orthogonal to the axial direction and orthogonal to a radial direction.

"Direction of rotation" or the letter "D" in the figures refers to the direction the tire was designed to predominantly rotate in for aesthetics and/or performance reasons. Rotation in a direction opposite than the direction of rotation is possible and anticipated.

"Radial plane" means a plane that passes perpendicular to the equatorial plane and through the axis of rotation of the tire.

"Lateral direction" or the letter "L" means a direction that is orthogonal to an equatorial plane.

"Elastic material" or "Elastomer" as used herein refers to a polymer exhibiting rubber-like elasticity, such as a material comprising rubber.

"Elastomeric" as used herein refers to a material comprising an elastic material or elastomer, such as a material comprising rubber.

"Interior angle" or "Internal angle" as used herein means an angle formed between two surfaces that is greater than 0 degrees but less than 180 degrees. An acute angle, a right angle and an obtuse angle would all be considered "interior angles" as the term is used herein.

"Exterior angle" or "External angle" or "Reflex angle" as used herein means an angle formed between two surfaces that is greater than 180 degrees but less than 360 degrees.

"Deflectable" means able to be bent resiliently.

"Nominal load" or "desired design load" is a load for which the structure is designed to carry. More specifically, when used in the context of a wheel or tire, "nominal load" refers to the load for which the wheel or tire is designed to carry and operate under. The nominal load or desired design load includes loads up to and including the maximum load specified by the manufacturer and, in the case of a vehicle tire, often indicated by marking on the side of the tire. A loading condition in excess of the nominal load may be sustained by the structure, but with the possibility of structural damage, accelerated wear, or reduced performance. A loading condition of less than nominal load, but more than an unloaded state, may be considered a nominal load, though deflections will likely be less than deflections at nominal load.

"Modulus" or "Modulus of elongation" (MPa) was measured at 10% (MA10) at a temperature of 23 °C based on ASTM Standard D412 on dumb bell test pieces. The measurements were taken in the second elongation; i.e., after an accommodation cycle. These measurements are secant moduli in MPa, based on the original cross section of the test piece.

"Distal" is a direction away from the mass center of spoke.

"Proximal" is a direction toward or closer to the mass center of the spoke.

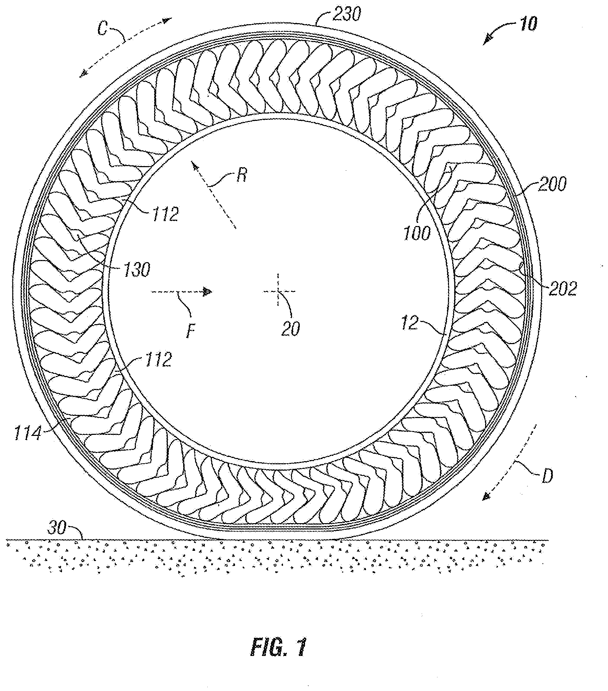

FIG. 1 shows a lateral side view of an exemplary embodiment of the present invention wherein a plurality of resilient composite structures are configured as spokes 100 and are attached to an outer compliant band 200 forming a part of a tire 10. The tire 10 may be incorporated into a wheel for a vehicle. For example, the tire 10 may be part of a non-pneumatic wheel having a hub 12 which is attached to a passenger vehicle allowing the vehicle to roll across a ground surface. Other objects and vehicles may incorporate the invention, including but not limited to: heavy duty truck, trailer, light truck, off-road, ATV, bus, aircraft, agricultural, mining, bicycle, motorcycle and passenger vehicle tires. Such a non-pneumatic wheel would possess a hub 12 that would have a radially outer surface having an axis of revolution about a central axis 20. The tire 10 may be attached to the hub 10 by any of a number of methods, for example, by mechanical fasteners such as bolts, screws, clamps or slots, and/or by adhesives such as cyanoacrylates, polyurethane adhesives, and/or by other bonding materials or a combination thereof.

The tire 10 shown here possesses an axis of rotation 20 about which the tire 10 rotates. In this exemplary embodiment, the radially outer surface 230 of the outer compliant band 200 interfaces with a ground surface 30 over which the tire rolls forming a contact patch, or area of the outer compliant band 200 that conforms to the surface upon which it is in contact with. Under a nominal load, the spokes 100 of the tire flex as the tire enters and exits the contact patch. Smaller deflections occur in the spokes 100 as the spoke rotates about the axis 20 outside the contact patch, but most of the deflection occurs while the spoke 100 enters, exits and travels through the contact patch.

Each spoke 100 possesses a "nose" portion 130 which acts as a resilient hinge. The "nose" portion 130 is an elastomeric joint body connecting a support element forming the radially inner portion of the spoke and a support element forming the radially outer portion of the spoke. The support elements of the spoke 100 are initially positioned at an angle relative to each other. The angle between the spoke support elements measuring less than 180 degrees is the interior angle and the angle between the spoke support elements measuring greater than 180 degrees is the exterior angle. The elastomeric joint is comprised of an elastomer attached to each spoke support element and is positioned on the side of the spoke elements on the interior angle side.

In this embodiment, the radially inner portion of the spoke possesses a radially inner foot 112 which connects to another surface, which is the radially outer surface of the hub 12 in the present embodiment. In the present embodiment, the radially inner foot 112 is comprised of an elastomeric joint body that connects the radially outer support to the hub 12. The radially outer portion of the spoke 100 possesses a radially outer foot 114 which is comprised of another elastomeric joint body which connects the outer support element 144 to yet another surface which is in the present embodiment the radially inner surface 202 of the outer compliant band 200.

In the exemplary embodiment shown, the tread band 200 comprises an elastomeric material and allows deformation to form a planar footprint in the contact patch. In the exemplary embodiment shown, the radially outer foot 114 of the spoke 100 is attached to the radially inner surface 202 of the tread band 200 and to the opposite side of the support element from the nose portion 130. In the exemplary embodiment shown, the spoke 100 is adhered in place by an adhesive. In other embodiments, the spoke 100 may be attached by other methods, including by adhering the elastomeric material together, for instance by using green rubber and curing the rubber components together, or using a strip of green rubber between cured or partially cured rubber components. In some embodiments, the outer compliant band 200 may also possess a reinforcement to help carry the load circumferentially around the tire.

For this particular embodiment, the size of the tire 100 is equivalent to a pneumatic tire of the size 215/45R17. In the particular embodiment shown, 64 spokes 100 are attached around the inner circumference of the outer compliant band 200. Under nominal loading conditions the tire 10 deflects 20 mm from the unloaded state. In the exemplary embodiment, 500 kg of mass load (approximately 4,900 N force) was used to approximate the nominal loading condition of the tire.

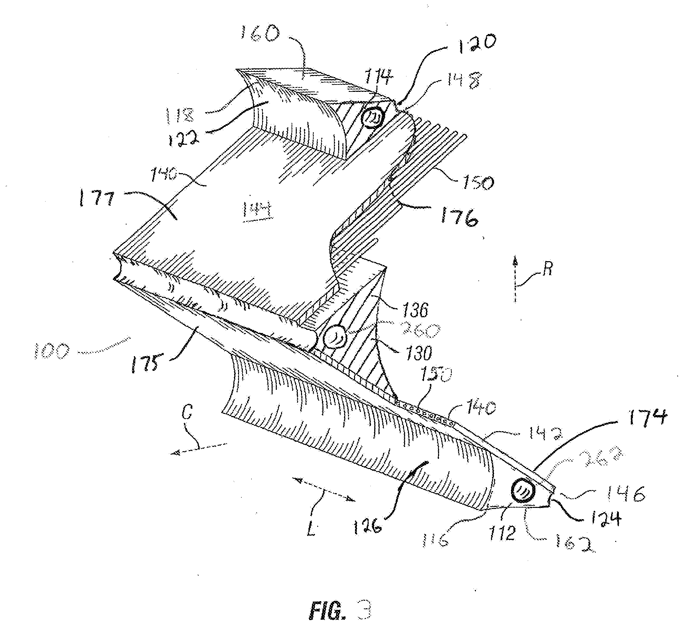

FIG. 3 provides a perspective cutaway view of an embodiment of the invention, here it is shown in the embodiment of a spoke 100 for a non-pneumatic tire. The nose portion, or otherwise referred to as the "nose joint body" 130 of the spoke 100 is comprised of an elastomeric material and acts to connect a first support element and a second support element, here comprising a radially outer leg 144 and a radially inner leg 142 respectively. The nose portion becomes circumferentially thicker as measured in the circumferential direction ("C") between the radially inner leg 142 and radially outer leg 144 as you get closer to the halfway point between the radially inner leg 142 and radially outer leg 144. The nose elastomeric joint body 130 is radially thicker between the radially inner leg 142 and radially outer leg 144 as you move away from the nose portion of the spoke in the circumferential direction C. In reference to a single spoke as shown in this embodiment, the circumferential direction is generally orthogonal to both the radial direction and the lateral direction.

The support elements 142, 144 of the spoke 100 are referred herein as having a first side 174, 176 and a second side 175, 177. The radially outer elastomeric joint body 114 is positioned on the second side 177 of the radially outer support element 144 and the radially inner elastomeric joint body 112 is positioned on the second side 175 of the radially inner support element 142. The nose elastomeric joint body is positioned on the first sides 174, 176 of both the radially outer support element 144 and the radially inner support element 142.

The radially outer elastomeric joint body 114 has a first surface 120 positioned on the same side as the first side 176 of the radially outer support element 144 and a second surface 122 on the same side as the second surface 177 of the radially outer support element 144. The radially inner elastomeric joint body 112 has a first surface 124 positioned on the same side as the first side 174 of the radially inner support element 142 and a second surface 126 on the same side as the second surface 175 of the radially inner support element 142. The radially outer elastomeric joint body 114 has a radially outer surface 160 which attaches to the radially inner surface 202 of the outer compliant band 200 of the tire 10. The radially inner elastomeric joint body 112 has a radially inner surface 162 which attaches to the radially outer surface 14 of the hub 12 of the tire 10.

When the spoke is compressed, which would occur in this particular spoke by moving the radially outer elastomeric joint body 114 toward the radially inner elastomeric joint body 112, the thicker portion of the nose elastomeric joint body 130 compresses and radial tension develops in the thinner portion of the nose elastomeric joint body as the support elements hinge about the nose elastomeric joint body. During compression of the spoke, the radially outer elastomeric joint body 114 and radially inner elastomeric joint body 112 also undergo compression in the radially thicker portion of the joint body and tension in the radially thinner portion of the joint body closer to the ends of the support element 142, 144 ends 146, 148.

Likewise, when the spoke 100 is deformed radially inward, undergoing compression between the radially outer foot 114 and radially inner foot 112, the nose elastomeric joint body 130 undergoes compression between the radially inner support element 142 and radially outer support element 144 of the spoke while the distal portion of the nose elastomeric joint body 130 undergoes tension between the radially inner support element 142 and the radially outer support element 144.

Reinforcements 150 in the support elements 142, 144 provide flexural stiffness beyond that which the surrounding material can provide alone. The reinforcements may be constructed from any resilient material having a flexural stiffness greater than the elastomeric joint bodies. In this particular embodiment the reinforcements 150 are comprised of pultruded fiberglass reinforced resin. Other materials may be used, including metal, including spring steel, carbon fiber, fiber reinforced resins or fiber reinforced plastics. The reinforcements 150 of the current embodiment are oriented along the length of the support element 142, 144 and generally along the length of the spoke such that they lie parallel to the equatorial plane of the tire.

The spoke 100 of the embodiment shown, including the elastomeric joint bodies 112, 114, 130 and the material surrounding the reinforcement 150, is comprised of rubber of the general type used in the construction of conventional rubber pneumatic radial tires.

The rubber used in the embodiment shown comprises of a relatively soft rubber having a modulus of 3.2 MPa in the areas of the radially inner elastomeric joint body 112 and radially outer elastomeric joint body 114. Each elastomeric joint body 112, 114 is attached to the radially inner leg 142 and radially outer leg 144 respectively. The radially inner leg 142 and radially outer leg 144 are constructed to give them flexural rigidity, that is, to allow them to resiliently deform when the spoke 100 is under compression or tension. The radially outer end 148 of the radially outer leg 144 is attached to the elastomeric joint body 114, but is, in this embodiment, otherwise "free" and may move to compress or stretch the elastomeric joint body 114 when the spoke is being stretched or compressed. Likewise the radially inner end 146 of the radially inner leg 142 is attached to the elastomeric joint body 112, but is, in this embodiment, otherwise "free" and may move to compress or stretch the elastomeric joint body 112 when the spoke 100 is under compression or tension. The radially inner elastomeric joint body 112 generally becomes thicker in the circumferential direction nearer the hub 12 to which it is attached, however in the embodiment shown, it may become circumferentially thinner at points due to the profile of the geometry near the surface of the hub. In the embodiment shown, the elastomeric joint body 112 flairs outward forming a protrusion 116 nearest the hub 10. Likewise, the radially outer elastomeric joint body 114 generally becomes thicker in the circumferential direction nearer the outer band 200 to which it is attached. In the embodiment shown, the elastomeric joint body 114 flairs outward forming a protrusion 118 nearest the outer band 200.

The legs 142, 144 of the spoke 100 may be comprised of fiber reinforced plastic reinforcements surrounded by a rubber to form a membrane. In this embodiment the leg membranes 142, 144 possess a flexural rigidity of approximately 140,000 N-mm². In this particular embodiment, the filaments have a diameter of approximately 1 mm with a pace of about 2 mm apart. The filaments of the particular embodiment shown are glass reinforced resin formed by pultrusion. The filaments of the embodiment have a modulus of approximately 10 MPa 40GPa. Alternatively other reinforcements may be used, including carbon fiber such as graphite epoxy, glass epoxy or aramid reinforced resins or epoxy or combinations thereof. Unreinforced plastic reinforcements or metallic reinforcements may also be used, provided they have sufficient flexural rigidity for the nominal loads intended to be supported. Alternatively other pacing and other diameters of the membranes and reinforcements may be used. The legs 142, 144 of the spoke 100 have a relatively large stiffness compared to the other components comprising the spoke 100. The legs 142, 144 act resiliently and have a large bending stiffness allowing the nose portion 130 of the spoke to act as a joint body connecting the radially inner leg 142 with the radially outer leg 144. The feet 112, 114 act as second and third joint bodies, connecting the radially inner leg 142 to the hub and the radially outer leg 144 with the outer band 200.

In order to reduce the mass of the elastomeric joint bodies 130, 112, 114, apertures 260, 262, 264 are created in areas where low compressive and tensile stresses are anticipated. The apertures 260, 262, 264 are shown in this embodiment as having a circular lateral cross section. Each aperture extends laterally into the elastomeric joint body. In the embodiment shown the aperture extends all the way laterally through the elastomeric joint body. In other embodiments the aperture may extend partially through the elastomeric joint body.

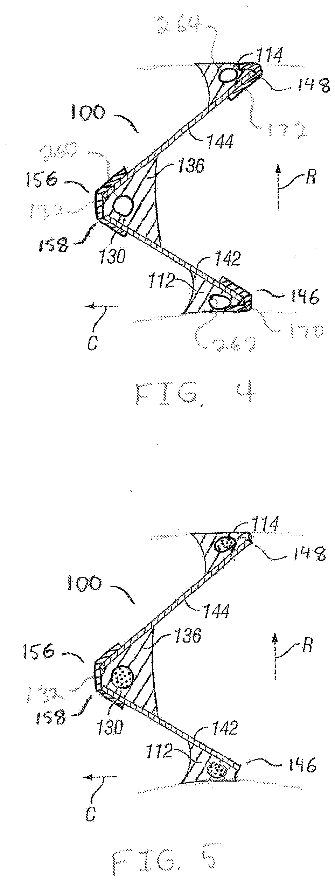

FIG. 4 provides a lateral section view of an alternative joint body taken across the equatorial plane of the non-pneumatic tire 10. Here the radially inner aperture 262, and the radially outer aperture 264 have an oval cross section profile while the nose aperture 260 has a circular cross section profile. This embodiment also possesses a radially outer reinforcement membrane 170 over the radial outer end of the radially outer support element 144, a radially inner reinforcement membrane 172 over the radially inner end of the radially outer support element 142 and a nose reinforcement membrane 132 over the radially outer end 158 of the radially inner support element 112 and radially inner end 156 of the radially outer support element 114. In other embodiments, the reinforcement membranes may be absent over any one or more of the elastomeric joint bodies.

FIG. 5 provides a lateral section view of another alternative joint body taken across the equatorial plane of the non-pneumatic tire 10. Here the radially inner aperture 262, and the radially outer aperture 264 have an oval cross section profile while the nose aperture 260 has a circular cross section profile, however in this embodiment, the apertures are filled with a low-density material 176 within the apertures 260, 262, 264. "Low density", or "lower density", as used herein, refers to a material having a lower density than the material making up the surrounding elastomeric joint body material. The low-density material may be comprised of the same material of the surrounding elastomeric material, for example, an expanded elastomeric material, or may be a different material than the surrounding elastomeric joint body material. In this embodiment, the low-density material 176 is a closed cell foam. Other materials may be used, such as an open cell foam. The low-density material 176 works to reduce the mass of the elastomeric joint bodies 130, 112, 114 while preventing material from entering the apertures. This embodiment also possesses a nose reinforcement membrane 132 over the radially outer end 158 of the radially inner support element 112 and radially inner end 156 of the radially outer support element 114.

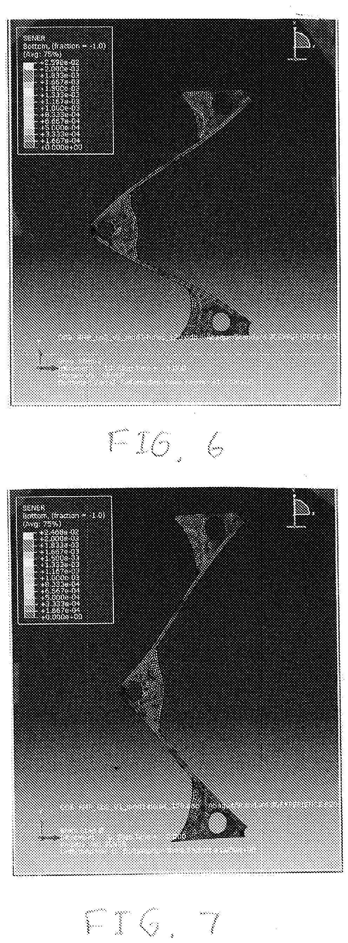

FIG. 6 and FIG. 7 show a computer model of the spoke 100 of the embodiment of FIG. 4 under compression and tension respectively. FIG. 6 represents an amount of compression that would occur when the spoke is in the middle of the tire contact patch with the tire under a nominal load, that is, a 20mm displacement of the outer compliant band 200 toward the hub 12. FIG. 7 shows the tire under 20 mm of tension. The stress values show reasonable peak stresses within the elastomeric joint bodies 130, 112, 114 despite the loss of material due to the lightening apertures 260, 262, 264.

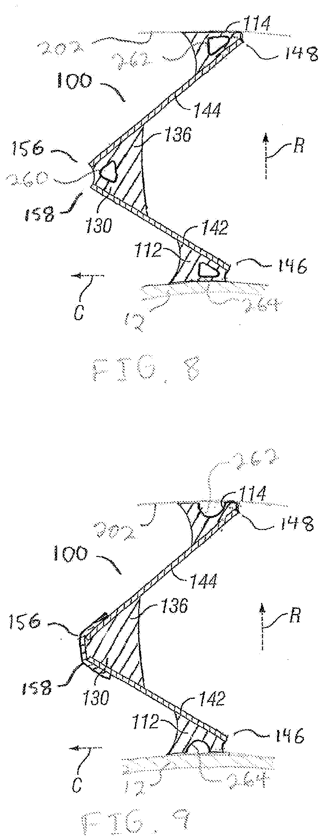

FIG. 8 shows a lateral cross section of yet another embodiment where the apertures 260, 262 and 264 possess a non-round shape. Here in this embodiment the apertures of the nose elastomeric joint body 130, radially inner elastomeric joint body 112 and the radially outer elastomeric joint body 114 have a triangular cross section.

FIG. 9 shows a lateral cross section of another embodiment where the radially inner aperture 262 and the radially outer aperture 264 possess semi-circular cross sections. The radially inner aperture 264 is partially formed by the elastomeric joint body 112 and partially by a portion of the radially outer surface of the hub 12 in this embodiment. The radially outer aperture 262 of this embodiment is formed partially by the radially outer elastomeric joint body 114 and partially by the radially inner surface 202 of the radially outer compliant band 200.

The "v-shape" of the embodiments of the spoke shown and described herein allow the adjacent spokes to "nest" and give linear spring rate when deflected radially over a distance approximately equal to the tires vertical deflection. The nesting of the spokes avoid adjacent spokes from clashing under normal loading conditions.

It should be understood by a person of ordinary skill in the art that the stiffness of the spoke may be adjusted by adjusting the length of the "v" of the "v-shaped spoke", the constituent material moduli and the internal architecture of the spoke.

It should be understood that other web element configurations and geometries may be used within the scope of the invention. While when the resilient composite structure is configured as a spoke they are configured to extend in a lateral direction across the width of the tire, it should be understood that they may be configured at other angles, such as at an angle to the lateral direction of the tire. For example, the spoke may extend at a diagonal between the circumferential direction and the lateral direction of the tire. In yet other embodiments, the spoke may be turned 90 degrees to run circumferentially around the diameter of the tire, thereby resembling a sidewall of a pneumatic tire. In such a configuration, the spoke would be configured like a continuous toroid about the hub of the wheel.

Selected combinations of aspects of the disclosed technology correspond to a plurality of different embodiments of the present invention. It should be noted that each of the exemplary embodiments presented and discussed herein should not insinuate limitations of the present subject matter. Features or steps illustrated or described as part of one embodiment may be used in combination with aspects of another embodiment to yield yet further embodiments. Additionally, certain features may be interchanged with similar devices or features not expressly mentioned which perform the same or similar function.

The dimensions and values disclosed herein are not to be understood as being strictly limited to the exact numerical values recited. Instead, unless otherwise specified, each such dimension is intended to mean both the recited value and a functionally equivalent range surrounding that value. For example, a dimension disclosed as "40 mm" is intended to mean "about 40 mm." Also, the dimensions and values disclosed herein are not limited to a specified unit of measurement. For example, dimensions expressed in English units are understood to include equivalent dimensions in metric and other units (e.g., a dimension disclosed as "1 inch" is intended to mean an equivalent dimension of "2.5 cm").

As used herein, the term "method" or "process" refers to one or more steps that may be performed in other ordering than shown without departing from the scope of the presently disclosed invention as defined by the appended claims. As used herein, the term "method" or "process" may include one or more steps performed at least by one electronic or computer-based apparatus. Any sequence of steps is exemplary and is not intended to limit methods described herein to any particular sequence, nor is it intended to preclude adding steps, omitting steps, repeating steps, or performing steps simultaneously. As used herein, the term "method" or "process" may include one or more steps performed at least by one electronic or computer-based apparatus having a processor for executing instructions that carry out the steps.

The terms "a," "an," and the singular forms of words shall be taken to include the plural form of the same words, such that the terms mean that one or more of something is provided. The terms "at least one" and "one or more" are used interchangeably. Ranges that are described as being "between a and b" are inclusive of the values for "a" and "b."

## Claims

1. A spoke (100) for a non-pneumatic tire (10), the spoke (100) connecting a radially inner surface (162; 202) of a radially outer compliant band (200) to a radially outer surface of a hub (12), the tire (10) defining an axis of rotation (20) about its center and a medial plane tangent to the axis of rotation (20), the spoke (100) comprising:
a radially outer support element (114, 142, 144) having a radially inner end (146, 156), a radially outer end (148, 158), a first side (174, 176) and a second side (175, 177);
a radially outer elastomeric joint body (114) connecting the radially outer end (148, 158) of the radially outer support element (114, 142, 144) to the radially outer compliant band (200), the radially outer elastomeric joint body (114) positioned on said second side (175, 177) of said radially outer support element (114, 142, 144), the radially outer elastomeric joint body (114) having a first surface (120, 124) on the same side of the radially outer elastomeric joint body (114) as the first side (174, 176) of said radially outer support element (114, 142, 144) and a second surface (122, 177, 126, 175) on the same side of the radially outer elastomeric joint body (114) as the second side (175, 177) of said radially outer support element (114, 142, 144), the elastomeric radially outer joint body having a thickness measured as the circumferential distance between the first surface (120, 124) and the second surface (122, 177, 126, 175) of the radially outer elastomeric joint body (114) at a particular radial distance from a radial outer surface of the radially outer elastomeric joint body (114),
the radially outer support element (114, 142, 144) further comprising one or more elongated reinforcements (150) having a length and a thickness measured perpendicular to the length;
**characterized in that**
said elongated reinforcements (150) have a flexural rigidity greater than the elastomer comprising the radially outer joint body,
the radially outer elastomeric joint body (114) further comprises an aperture (262, 264) positioned a distance no greater than two thirds of the minimum thickness of the radially outer elastomeric joint body (114) from the first surface (120, 124) of the radially outer elastomeric joint body (114).

2. The spoke (100) of claim 1 further comprising:
a radially inner support element (112, 142) having a radially inner end (146, 156), a radially outer end (148, 158), a first side (174, 176) and a second side (175, 177), said radially outer support element (114, 142, 144) forming an interior angle with said radially inner support element (112, 142), said interior angle positioned on a first side (174, 176) of the radially inner support element (112, 142) and the first side (174, 176) of the radially inner support element (112, 142),
a middle elastomeric joint body connecting said radially inner support element radially outer end (148, 158) and said radially outer support element radially inner end (146, 156), said middle elastomeric joint body positioned on the first side (174, 176) of said first support element and the first side (174, 176) of said radially inner support element (112, 142), the middle elastomeric joint body having a first surface (120, 124) on the first side (174, 176) of the first support element and the second support element and a second surface (122, 177, 126, 175) on the second side (175, 177) of the first support element and the second support element, the middle elastomeric joint body having a thickness measured as the circumferential distance between the first surface (120, 124) of the middle elastomeric joining body and the second surface (122, 177, 126, 175) of the middle elastomeric joint body measured at a particular radial distance from a radial outer surface of the radially outer elastomeric joint body (114).

3. The spoke (100) of claim 2 further comprising:
a radially inner elastomeric joint body (112) connecting said radially inner support element radially inner end (146, 156) to said hub (12) and positioned on said second side (175, 177) of said radially inner support element (112, 142), the radially inner elastomeric joint body (112) having a first surface (120, 124) on the same side of the radially inner elastomeric joint body (112) as the first side (174, 176) of the radially inner support element (112, 142) and a second surface (122, 177, 126, 175) on the same side of the radially inner elastomeric joint body (112) as the second side (175, 177) of the radially inner support element (112, 142), the radially inner elastomeric joint body (112) having a thickness measured as the circumferential distance between the first surface (120, 124) and the second surface (122, 177, 126, 175) of the radially inner elastomeric joint body (112) measured at a particular radial distance from a radial inner surface of the radially inner elastomeric joint body (112);
the radially inner elastomeric joint body (112) further comprising an aperture (262, 264) positioned a distance no greater than two thirds of the minimum thickness of the radially inner elastomeric joint body (112) from the first surface (120, 124) of the radially inner elastomeric joint body (112).

4. The spoke (100) of claim 2 or 3 wherein the middle elastomeric joint body further comprises a second aperture (262, 264) positioned a distance no greater than one half of the minimum thickness of the middle elastomeric joint body from the first surface (120, 124) of the middle elastomeric joint body.

5. The spoke (100) of any of the above claims wherein the aperture (262, 264) of the radially outer elastomeric joint body (114) passes laterally through the elastomeric joint body.

6. The spoke (100) of any of the above claims wherein the aperture (262, 264) of the radially outer elastomeric joint body (114) is a closed curve with a convex interior.

7. The spoke (100) of claim 6 wherein the aperture (264) of the radially outer elastomeric joint body (114) is oval.

8. The spoke (100) of claim 6 wherein the aperture (262, 264) of the radially outer elastomeric joint body (114) is circular.

9. The spoke (100) of claim 7 wherein the aperture (262, 264) of the radially outer elastomeric joint body (114) has a minor diameter of approximately five times the thickness of the elongated reinforcement (150) and a major diameter of approximately seven times the thickness of the elongated reinforcement (150).

10. The spoke (100) of claim 7 wherein the aperture (264) of the radially outer elastomeric joint body (114) has a minor diameter of approximately 5 mm and a major diameter of approximately 7 mm.

11. The spoke (100) of any of the above claims wherein the radially inner support element (112, 142) is comprised of one or more elongated reinforcements (150) having a flexural rigidity greater than the elastomer comprising the radially outer joint body.

12. The spoke (100) of any of the above claims wherein said radially outer support element radially outer end (148, 158) is a free end.

13. The spoke (100) of any of the above claims wherein the thickness of the reinforcement (150) is 1 mm.

14. The spoke (100) of claim 3 wherein the aperture (262, 264) of the radially inner elastomeric joint body (112) is an oval having a major diameter of seven times the thickness of the elongated reinforcement (150) of the radially inner support element (112, 142) and a minor diameter of five times the thickness of the elongated reinforcement (150) of the radially inner support element (112, 142), the aperture (262, 264) of the radially outer elastomeric joint body (114) is an oval having a major diameter of seven times the thickness of the elongated reinforcement (150) of the radially outer support element (114, 142, 144) and a minor diameter of five times the thickness of the elongated reinforcement (150) of the radially outer support element (114, 142, 144), and the aperture (262, 264) of the middle elastomeric joint body is an circle having a diameter of five times the thickness of the elongated reinforcement (150) of the radially inner support element (112, 142).

15. The spoke (100) of claim 7 or 10 wherein the aperture (262) of the radially inner elastomeric joint body (112) is oval and has its major diameter positioned in the circumferential direction (C), and the aperture (264) of the radially outer elastomeric joint body (114) also has its major diameter positioned in the circumferential direction (C).

16. The spoke (100) of claim 14 wherein the aperture (262, 264) of the radially outer elastomeric joint body (114) passes laterally through the radially outer elastomeric joint body (114), the aperture (262, 264) of the middle elastomeric joint body passes laterally through the middle elastomeric joint body, wherein the aperture (262, 264) of the radially outer elastomeric joint body (114) passes laterally through the elastomeric joint body, and wherein the aperture (262, 264) of the radially inner elastomeric joint body (112) passes laterally through the radially inner elastomeric joint body (112).

17. The spoke (100) of claim 1 wherein the aperture (262, 264) of the radially outer elastomeric joint body (114) is a semicircle with a portion of the aperture (262, 264) wall comprised of a portion of the radially outer compliant band (200).

18. A spoke (100) of any of the above claims wherein the aperture (262, 264) of the radially outer elastomeric joint body (114) is filled with a material having a lower density (176) than the radially outer elastomeric joint body (114).

## Patentansprüche

1. Speiche (100) für einen nicht-pneumatischen Reifen (10), wobei die Speiche (100) eine radial innere Oberfläche (162; 202) eines radial äußeren nachgiebigen Bandes (200) mit einer radial äußeren Oberfläche einer Nabe (12) verbindet, wobei der Reifen (10) eine Rotationsachse (20) um seine Mitte und eine mediale Ebene tangential zur Rotationsachse (20) definiert, wobei die Speiche (100) umfasst:
ein radial äußeres Stützelement (114, 142, 144) mit einem radial inneren Ende (146, 156), einem radial äußeren Ende (148, 158), einer ersten Seite (174, 176) und einer zweiten Seite (175, 177);
einen radial äußeren elastomeren Verbindungskörper (114), der das radial äußere Ende (148, 158) des radial äußeren Stützelementes (114, 142, 144) mit dem radial äußeren nachgiebigen Band (200), dem radial äußeren elastomeren Verbindungskörper (114) verbindet, der auf der zweiten Seite (175, 177) des radial äußeren Stützelementes (114, 142, 144) angeordnet ist, wobei der radial äußere elastomere Verbindungskörper (114) eine erste Fläche (120, 124) auf derselben Seite des radial äußeren elastomeren Verbindungskörpers (114) hat wie die erste Seite (174, 176) des radial äußeren Stützelementes (114, 142, 144), und eine zweite Fläche (122, 177, 126, 175) auf derselben Seite des radial äußeren elastomeren Verbindungskörpers (114) wie die zweite Seite (175, 177) des radial äußeren Stützelementes (114, 142, 144), wobei der elastomere radial äußere Verbindungskörper eine Dicke aufweist, die als Umfangsabstand zwischen der ersten Fläche (120, 124) und der zweiten Fläche (122, 177, 126, 175) des radial äußeren elastomeren Verbindungskörpers (114) in einem bestimmten radialen Abstand von einer radial äußeren Oberfläche des radial äußeren elastomeren Verbindungskörpers (114) gemessen wird;
wobei das radial äußere Stützelement (114, 142, 144) ferner eine oder mehrere längliche Verstärkungen (150) mit einer Länge und einer senkrecht zur Länge gemessenen Dicke aufweist;
**dadurch gekennzeichnet, dass**
die länglichen Verstärkungen (150) eine größere Biegesteifigkeit aufweisen als das Elastomer, aus dem der radial äußere Verbindungskörper besteht,
der radial äußere elastomere Verbindungskörper (114) ferner eine Öffnung (262, 264) aufweist, die in einem Abstand von nicht mehr als zwei Dritteln der Mindestdicke des radial äußeren elastomeren Verbindungskörpers (114) von der ersten Oberfläche (120, 124) des radial äußeren elastomeren Verbindungskörpers (114) angeordnet ist.

2. Speiche (100) nach Anspruch 1, die ferner umfasst:
ein radial inneres Stützelement (112, 142) mit einem radial inneren Ende (146, 156), einem radial äußeren Ende (148, 158), einer ersten Seite (174, 176) und einer zweiten Seite (175, 177), wobei das radial äußere Stützelement (114, 142, 144) einen Innenwinkel mit dem radial inneren Stützelement (112, 142) bildet, wobei der Innenwinkel auf einer ersten Seite (174, 176) des radial inneren Stützelements (112, 142) und der ersten Seite (174, 176) des radial inneren Stützelements (112, 142) angeordnet ist,
einen mittleren elastomeren Verbindungskörper, der das radial innere Stützelement mit dem radial äußeren Ende (148, 158) und das radial äußere Stützelement mit dem radial inneren Ende (146, 156) verbindet, wobei der mittlere elastomere Verbindungskörper auf der ersten Seite (174, 176) des ersten Stützelements und der ersten Seite (174, 176) des radial inneren Stützelementes (112, 142) angeordnet ist, wobei der mittlere elastomere Verbindungskörper eine erste Oberfläche (120, 124) auf der ersten Seite (174, 176) des ersten Stützelementes und des zweiten Stützelementes und eine zweite Oberfläche (122, 177, 126, 175) auf der zweiten Seite (175, 177) des ersten Stützelementes und des zweiten Stützelementes aufweist, wobei der mittlere elastomere Verbindungskörper eine Dicke aufweist, die als Umfangsabstand zwischen der ersten Oberfläche (120, 124) des mittleren elastomeren Verbindungskörpers und der zweiten Oberfläche (122, 177, 126, 175) des mittleren elastomeren Verbindungskörpers, gemessen in einem bestimmten radialen Abstand von einer radialen Außenfläche des radial äußeren elastomeren Verbindungskörpers (114), gemessen wird.

3. Speiche (100) nach Anspruch 2, die ferner umfasst:
einen radial inneren elastomeren Verbindungskörper (112), der das radial innere Ende (146, 156) des radial inneren Stützelementes mit der Nabe (12) verbindet und auf der zweiten Seite (175, 177) des radial inneren Stützelementes (112, 142) angeordnet ist, wobei der radial innere elastomere Verbindungskörper (112) eine erste Oberfläche (120, 124) auf derselben Seite des radial inneren elastomeren Verbindungskörpers (112) wie die erste Seite (174, 176) des radial inneren Stützelementes (112, 142) und eine zweite Oberfläche (122, 177, 126, 175) auf derselben Seite des radial inneren elastomeren Verbindungskörpers (112) wie die zweite Seite (175, 177) des radial inneren Stützelementes (112, 142) aufweist, wobei der radial innere elastomere Verbindungskörper (112) eine Dicke aufweist, die als Umfangsabstand zwischen der ersten Oberfläche (120, 124) und der zweiten Oberfläche (122, 177, 126, 175) des radial inneren elastomeren Verbindungskörpers (112) gemessen wird, gemessen in einem bestimmten radialen Abstand von einer radial inneren Oberfläche des radial inneren elastomeren Verbindungskörpers (112);
wobei der radial innere elastomere Verbindungskörper (112) ferner eine Öffnung (262, 264) aufweist, die in einem Abstand von nicht mehr als zwei Dritteln der Mindestdicke des radial inneren elastomeren Verbindungskörpers (112) von der ersten Oberfläche (120, 124) des radial inneren elastomeren Verbindungskörpers (112) angeordnet ist.

4. Speiche (100) nach Anspruch 2 oder 3, wobei der mittlere elastomere Verbindungskörper ferner eine zweite Öffnung (262, 264) aufweist, die in einem Abstand von nicht mehr als der Hälfte der Mindestdicke des mittleren elastomeren Verbindungskörpers von der ersten Oberfläche (120, 124) des mittleren elastomeren Verbindungskörpers angeordnet ist.

5. Speiche (100) nach einem der vorhergehenden Ansprüche, wobei die Öffnung (262, 264) des radial äußeren elastomeren Verbindungskörpers (114) seitlich durch den elastomeren Verbindungskörper verläuft.

6. Speiche (100) nach einem der vorhergehenden Ansprüche, wobei die Öffnung (262, 264) des radial äußeren elastomeren Verbindungskörpers (114) eine geschlossene Kurve mit einem konvexen Inneren ist.

7. Speiche (100) nach Anspruch 6, wobei die Öffnung (264) des radial äußeren elastomeren Verbindungskörpers (114) oval ist.

8. Speiche (100) nach Anspruch 6, wobei die Öffnung (262, 264) des radial äußeren elastomeren Verbindungskörpers (114) kreisförmig ist.

9. Speiche (100) nach Anspruch 7, wobei die Öffnung (262, 264) des radial äußeren elastomeren Verbindungskörpers (114) einen kleineren Durchmesser von ungefähr dem Fünffachen der Dicke der länglichen Verstärkung (150) und einen größeren Durchmesser von ungefähr dem Siebenfachen der Dicke der länglichen Verstärkung (150) aufweist.

10. Speiche (100) nach Anspruch 7, wobei die Öffnung (264) des radial äußeren elastomeren Verbindungskörpers (114) einen kleineren Durchmesser von etwa 5 mm und einen größeren Durchmesser von etwa 7 mm aufweist.

11. Speiche (100) nach einem der vorhergehenden Ansprüche, wobei das radial innere Stützelement (112, 142) aus einer oder mehreren länglichen Verstärkungen (150) besteht, die eine größere Biegesteifigkeit aufweisen als das Elastomer, das den radial äußeren Verbindungskörper umfasst.

12. Speiche (100) nach einem der vorhergehenden Ansprüche, wobei das äußere Ende (148, 158) des radial äußeren Stützelementes ein freies Ende ist.

13. Speiche (100) nach einem der vorhergehenden Ansprüche, wobei die Dicke der Verstärkung (150) 1 mm beträgt.

14. Speiche (100) nach Anspruch 3, wobei die Öffnung (262, 264) des radial inneren elastomeren Verbindungskörpers (112) ein Oval ist, das einen größeren Durchmesser vom Siebenfachen der Dicke der länglichen Verstärkung (150) des radial inneren Stützelementes (112, 142) und einen kleineren Durchmesser vom Fünffachen der Dicke der länglichen Verstärkung (150) des radial inneren Stützelementes (112, 142) aufweist, die Öffnung (262, 264) des radial äußeren elastomeren Verbindungskörpers (114) ein Oval ist, das einen größeren Durchmesser vom Siebenfachen der Dicke der länglichen Verstärkung (150) des radial äußeren Stützelementes (114, 142, 144) und einen kleineren Durchmesser vom Fünffachen der Dicke der länglichen Verstärkung (150) des radial äußeren Stützelementes (114, 142, 144) hat, und die Öffnung (262, 264) des mittleren elastomeren Verbindungskörpers ein Kreis mit einem Durchmesser ist, der fünfmal so groß ist wie die Dicke der länglichen Verstärkung (150) des radial inneren Stützelementes (112, 142).

15. Speiche (100) nach Anspruch 7 oder 10, bei der die Öffnung (262) des radial inneren elastomeren Verbindungskörpers (112) oval ist und ihr Hauptdurchmesser in Umfangsrichtung (C) liegt, und die Öffnung (264) des radial äußeren elastomeren Verbindungskörpers (114) hat ihren Hauptdurchmesser ebenfalls in der Umfangsrichtung (C).

16. Speiche (100) nach Anspruch 14, wobei die Öffnung (262, 264) des radial äußeren elastomeren Verbindungskörpers (114) seitlich durch den radial äußeren elastomeren Verbindungskörper (114) verläuft, die Öffnung (262, 264) des mittleren elastomeren Verbindungskörpers seitlich durch den mittleren elastomeren Verbindungskörper verläuft, wobei die Öffnung (262, 264) des radial äußeren elastomeren Verbindungskörpers (114) seitlich durch den elastomeren Verbindungskörper verläuft, und wobei die Öffnung (262, 264) des radial inneren elastomeren Verbindungskörpers (112) seitlich durch den radial inneren elastomeren Verbindungskörper (112) verläuft.

17. Speiche (100) nach Anspruch 1, wobei die Öffnung (262, 264) des radial äußeren elastomeren Verbindungskörpers (114) ein Halbkreis ist und ein Teil der Wand der Öffnung (262, 264) aus einem Teil des radial äußeren nachgiebigen Bandes (200) besteht.

18. Speiche (100) nach einem der vorhergehenden Ansprüche, wobei die Öffnung (262, 264) des radial äußeren elastomeren Verbindungskörpers (114) mit einem Material gefüllt ist, das eine geringere Dichte (176) als der radial äußere elastomere Verbindungskörper (114) aufweist.

## Revendications

1. Rayon (100) pour un pneu (10) non pneumatique, le rayon (100) reliant une surface intérieure radialement (162 ; 202) d'une bande compliante extérieure radialement (200) à une surface extérieure radialement d'un moyeu (12), le pneu (10) définissant un axe de rotation (20) autour de son centre et un plan médial tangent à l'axe de rotation (20), le rayon (100) comprenant :
un élément de support extérieur radialement (114, 142, 144) ayant une extrémité intérieure radialement (146, 156), une extrémité extérieure radialement (148, 158), un premier côté (174, 176) et un deuxième côté (175, 177) ; un corps de liaison élastomère extérieur radialement (114) reliant l'extrémité extérieure radialement (148, 158) de l'élément de support extérieur radialement (114, 142, 144) à la bande compliante extérieure radialement (200), le corps de liaison élastomère extérieur radialement (114) étant positionné sur ledit deuxième côté (175, 177) dudit élément de support extérieur radialement (114, 142, 144), le corps de liaison élastomère extérieur radialement (114) ayant une première surface (120, 124) sur le même côté du corps de liaison élastomère extérieur radialement (114) que le premier côté (174, 176) dudit élément de support extérieur radialement (114, 142, 144) et une deuxième surface (122, 177, 126, 175) sur le même côté du corps de liaison élastomère extérieur radialement (114) que le deuxième côté (175, 177) dudit élément de support extérieur radialement (114, 142, 144), le corps de liaison extérieur radialement élastomère ayant une épaisseur mesurée comme la distance circonférentielle entre la première surface (120, 124) et la deuxième surface (122, 177, 126, 175) du corps de liaison élastomère extérieur radialement (114) à une distance radiale particulière à partir d'une surface extérieure radiale du corps de liaison élastomère extérieur radialement (114) ;
l'élément de support extérieur radialement (114, 142, 144) comprenant en outre un ou plusieurs renforts (150) allongés ayant une longueur et une épaisseur mesurée perpendiculairement à la longueur ;
**caractérisé en ce que**
lesdits renforts (150) allongés ont une rigidité à la flexion supérieure à l'élastomère comprenant le corps de liaison extérieur radialement,
le corps de liaison élastomère extérieur radialement (114) comprend en outre une ouverture (262, 264) positionnée à une distance non supérieure à deux tiers de l'épaisseur minimale du corps de liaison élastomère extérieur radialement (114) à partir de la première surface (120, 124) du corps de liaison élastomère extérieur radialement (114) .

2. Rayon (100) selon la revendication 1 comprenant en outre :
un élément de support intérieur radialement (112, 142) ayant une extrémité intérieure radialement (146, 156), une extrémité extérieure radialement (148, 158), un premier côté (174, 176) et un deuxième côté (175, 177), ledit élément de support extérieur radialement (114, 142, 144) formant un angle intérieur avec ledit élément de support intérieur radialement (112, 142), ledit angle intérieur étant positionné sur un premier côté (174, 176) de l'élément de support intérieur radialement (112, 142) et le premier côté (174, 176) de l'élément de support intérieur radialement (112, 142),
un corps de liaison élastomère intermédiaire reliant ladite extrémité extérieure radialement (148, 158) de l'élément de support intérieur radialement et ladite extrémité intérieure radialement (146, 156) de l'élément de support extérieur radialement, ledit corps de liaison élastomère intermédiaire étant positionné sur le premier côté (174, 176) dudit premier élément de support et le premier côté (174, 176) dudit élément de support intérieur radialement (112, 142), le corps de liaison élastomère intermédiaire ayant une première surface (120, 124) sur le premier côté (174, 176) du premier élément de support et du deuxième élément de support et une deuxième surface (122, 177, 126, 175) sur le deuxième côté (175, 177) du premier élément de support et du deuxième élément de support, le corps de liaison élastomère intermédiaire ayant une épaisseur mesurée comme la distance circonférentielle entre la première surface (120, 124) du corps de liaison élastomère intermédiaire et la deuxième surface (122, 177, 126, 175) du corps de liaison élastomère intermédiaire mesurée à une distance radiale particulière à partir d'une surface extérieure radiale du corps de liaison élastomère extérieur radialement (114).

3. Rayon (100) selon la revendication 2 comprenant en outre :
un corps de liaison élastomère intérieur radialement (112) reliant ladite extrémité intérieure radialement (146, 156) de l'élément de support intérieur radialement audit moyeu (12) et positionné sur ledit deuxième côté (175, 177) dudit élément de support intérieur radialement (112, 142), le corps de liaison élastomère intérieur radialement (112) ayant une première surface (120, 124) sur le même côté du corps de liaison élastomère intérieur radialement (112) que le premier côté (174, 176) de l'élément de support intérieur radialement (112, 142) et une deuxième surface (122, 177, 126, 175) sur le même côté du corps de liaison élastomère intérieur radialement (112) que le deuxième côté (175, 177) de l'élément de support intérieur radialement (112, 142), le corps de liaison élastomère intérieur radialement (112) ayant une épaisseur mesurée comme la distance circonférentielle entre la première surface (120, 124) et la deuxième surface (122, 177, 126, 175) du corps de liaison élastomère intérieur radialement (112) mesurée à une distance radiale particulière à partir d'une surface intérieure radiale du corps de liaison élastomère intérieur radialement (112) ;
le corps de liaison élastomère intérieur radialement (112) comprenant en outre une ouverture (262, 264) positionnée à une distance non supérieure à deux tiers de l'épaisseur minimale du corps de liaison élastomère intérieur radialement (112) à partir de la première surface (120, 124) du corps de liaison élastomère intérieur radialement (112) .

4. Rayon (100) selon la revendication 2 ou 3 dans lequel le corps de liaison élastomère intermédiaire comprend en outre une deuxième ouverture (262, 264) positionnée à une distance non supérieure à une moitié de l'épaisseur minimale du corps de liaison élastomère intermédiaire à partir de la première surface (120, 124) du corps de liaison élastomère intermédiaire.

5. Rayon (100) selon l'une quelconque des revendications ci-dessus dans lequel l'ouverture (262, 264) du corps de liaison élastomère extérieur radialement (114) passe latéralement à travers le corps de liaison élastomère.

6. Rayon (100) selon l'une quelconque des revendications ci-dessus dans lequel l'ouverture (262, 264) du corps de liaison élastomère extérieur radialement (114) est une courbe fermée avec un intérieur convexe.

7. Rayon (100) selon la revendication 6 dans lequel l'ouverture (264) du corps de liaison élastomère extérieur radialement (114) est ovale.

8. Rayon (100) selon la revendication 6 dans lequel l'ouverture (262, 264) du corps de liaison élastomère extérieur radialement (114) est circulaire.

9. Rayon (100) selon la revendication 7 dans lequel l'ouverture (262, 264) du corps de liaison élastomère extérieur radialement (114) a un diamètre intérieur approximativement de cinq fois l'épaisseur du renfort (150) allongé et un diamètre extérieur approximativement de sept fois l'épaisseur du renfort (150) allongé.

10. Rayon (100) selon la revendication 7 dans lequel l'ouverture (264) du corps de liaison élastomère extérieur radialement (114) a un diamètre intérieur approximativement de 5 mm et un diamètre extérieur approximativement de 7 mm.

11. Rayon (100) selon l'une quelconque des revendications ci-dessus dans lequel l'élément de support intérieur radialement (112, 142) est constitué d'un ou plusieurs renforts (150) allongés ayant une rigidité à la flexion supérieure à l'élastomère comprenant le corps de liaison extérieur radialement.

12. Rayon (100) selon l'une quelconque des revendications ci-dessus dans lequel ladite extrémité extérieure radialement (148, 158) de l'élément de support extérieur radialement est une extrémité libre.

13. Rayon (100) selon l'une quelconque des revendications ci-dessus dans lequel l'épaisseur du renfort (150) est de 1 mm.

14. Rayon (100) selon la revendication 3 dans lequel l'ouverture (262, 264) du corps de liaison élastomère intérieur radialement (112) est un ovale ayant un diamètre extérieur de sept fois l'épaisseur du renfort (150) allongé de l'élément de support intérieur radialement (112, 142) et un diamètre intérieur de cinq fois l'épaisseur du renfort (150) allongé de l'élément de support intérieur radialement (112, 142), l'ouverture (262, 264) du corps de liaison élastomère extérieur radialement (114) est un ovale ayant un diamètre extérieur de sept fois l'épaisseur du renfort (150) allongé de l'élément de support extérieur radialement (114, 142, 144) et un diamètre intérieur de cinq fois l'épaisseur du renfort (150) allongé de l'élément de support extérieur radialement (114, 142, 144), et l'ouverture (262, 264) du corps de liaison élastomère intermédiaire est un cercle ayant un diamètre de cinq fois l'épaisseur du renfort (150) allongé de l'élément de support intérieur radialement (112, 142).

15. Rayon (100) selon la revendication 7 ou 10 dans lequel l'ouverture (262) du corps de liaison élastomère intérieur radialement (112) est ovale et a son diamètre extérieur positionné dans la direction circonférentielle (C), et l'ouverture (264) du corps de liaison élastomère extérieur radialement (114) a également son diamètre extérieur positionné dans la direction circonférentielle (C) .

16. Rayon (100) selon la revendication 14 dans lequel l'ouverture (262, 264) du corps de liaison élastomère extérieur radialement (114) passe latéralement à travers le corps de liaison élastomère extérieur radialement (114), l'ouverture (262, 264) du corps de liaison élastomère intermédiaire passe latéralement à travers le corps de liaison élastomère intermédiaire, dans lequel l'ouverture (262, 264) du corps de liaison élastomère extérieur radialement (114) passe latéralement à travers le corps de liaison élastomère, et dans lequel l'ouverture (262, 264) du corps de liaison élastomère intérieur radialement (112) passe latéralement à travers le corps de liaison élastomère intérieur radialement (112) .

17. Rayon (100) selon la revendication 1 dans lequel l'ouverture (262, 264) du corps de liaison élastomère extérieur radialement (114) est un demi-cercle avec une partie de la paroi de l'ouverture (262, 264) constituée d'une partie de la bande compliante extérieure radialement (200).

18. Rayon (100) selon l'une quelconque des revendications ci-dessus dans lequel l'ouverture (262, 264) du corps de liaison élastomère extérieur radialement (114) est remplie d'un matériau ayant une densité inférieure (176) au corps de liaison élastomère extérieur radialement (114) .
